# EUROPÄISCHE PATENTSCHRIFT

(11) **EP 1 166 617 B1**
(45) Veröffentlichungstag und Bekanntmachung des Hinweises auf die Patenterteilung: **23.02.2005**
(21) Anmeldenummer: 01114190.0
(22) Anmeldetag: 12.06.2001
(51) Int. Cl.: A01F 12/44

(54) **Reinigungseinrichtung**
Cleaning device
Dispositif de nettoyage

(30) Priorität: 20.06.2000 DE 10030262
(43) Veröffentlichungstag der Anmeldung: 02.01.2002
(73) Patentinhaber: DEERE & COMPANY, Moline, Illinois 61265-8098 (US)
(72) Erfinder: Büermann, Martin, Dr., 89437 Haunsheim (DE)
(74) Vertreter: Holst, Sönke, Dr.

(56) Entgegenhaltungen:
- EP-A- 1 068 793
- DE-A- 19 824 462
- US-A- 1 383 918
- DATABASE WPI Section PQ, Week 198943 Derwent Publications Ltd., London, GB; Class P12, AN 1989-315178 XP002175217 & SU 1 471 980 A (ROSTSELMASH PROD AS), 15. April 1989 (1989-04-15)

## Beschreibung

### Beschreibung für folgende Vertragsstaaten: BE, DK, FR, GB, IT

Die Erfindung betrifft eine Reinigungseinrichtung für einen landwirtschaftlichen Mähdrescher, mit einem Siebkasten und mindestens einem aus dem Siebkasten herausnehmbaren Sieb, das einen Rahmen, darin angeordnete, verstellbare Lamellen sowie ein Verstellelement zur Verstellung der Lamellen aufweist, wobei am Siebkasten ein Antriebselement zur Verstellung des Verstellelements angeordnet und das Sieb ohne Demontage einer Verbindung zwischen Antriebselement und Verstellelement aus dem Siebkasten herausnehmbar ist und das Antriebselement nicht mit dem Sieb aus dem Siebkasten herausnehmbar ist.

In einer Erntemaschine, wie einem Mähdrescher, ist in der Regel nach dem Dreschen und Trennen noch etwas Spreu und Stroh mit dem Korn vermischt. Die Reinigungseinrichtung entfernt diese Verunreinigungen aus dem Korn. Bei den meisten Mähdreschern enthält die Reinigungseinrichtung drei Hauptkomponenten: ein Gebläse, ein Obersieb und ein Untersieb. Das Gebläse weist ein eigenes Gehäuse auf, während das Obersieb und das Untersieb an einem Siebkasten angebracht sind.

Ein einstellbares Sieb ist aus einer Reihe sich quer erstreckender Lamellen mit Reihen von Zähnen aufgebaut. Jede dieser Lamellen ist an einer Kurbelwelle befestigt, die einen Kurbelarm aufweist, der sich im Eingriff mit einer sich axial erstreckenden Verstellstange befindet. Durch ein axiales Verschieben der Verstellstange werden alle Lamellen gleichzeitig bewegt.

Das einstellbare Obersieb und Untersieb werden abhängig von den Erntegutbedingungen eingestellt. Die Lamellen des Obersiebs werden so weit geöffnet oder geschlossen, dass das Korn durch das Obersieb fällt, bevor es sich über die Länge des Obersiebs bewegt. Wenn das Obersieb zu weit geöffnet wird, kann es das Untersieb mit Spreu überlasten. Wenn das Obersieb nicht weit genug geöffnet wird und das Korn nicht abgeschieden werden kann, gelangt dieses zunächst auf die Obersiebverlängerung, was zu einer Überlastung der Überkehr führen kann. Können die Körner infolge zu weit geschlossener Siebe auch dort nicht abgeschieden werden, gelangen diese über das Siebende hinaus als Reinigungsverluste aus der Maschine hinaus auf das Feld. Die Lamellen des Untersiebs müssen weit genug geöffnet werden, um den Körnern des Getreides zu ermöglichen, leicht durch sie hindurch zu fallen, aber nicht so weit, dass Stroh und Spreu hindurch fallen können.

Bei vielen Mähdreschern muss ein Bediener in Abhängigkeit von der jeweiligen Fruchtart und Erntebedingungen an der Rückseite des Mähdreschers zwischen die Seitenbleche greifen, um diese Einstellungen an am Sieb angebrachten Handhebeln durchzuführen. Das macht die Einstellungen beschwerlich und zeitaufwändig. Den handbetätigten Verstelleinrichtungen mit Gestängen ist gemeinsam, dass die Betätigungselemente zur Vermeidung unnötiger Umlenkungen im Siebkasten angebracht sind und somit eine Gefahr für Verstopfungen bilden und darüber hinaus auch die Windführung im Siebkasten beeinträchtigen können.

Verschiedene fernbedienbare Einstellmechanismen wurden vorgeschlagen. Die US 4 897 027 A offenbart einen Kabelantriebsmechanismus, der einem Bediener erlaubt, den Winkel der Lamellen vom Platz eines Bedieners aus einzustellen. Die US 5 586 033 A offenbart ein Gerät, das die Lamellen durch einen motorisch angetriebenen Kabelmechanismus zur selbsttätigen Steuerung antreibt. Ein Nachteil dieser Siebverstellungen liegt im Spiel der Betätigungseinrichtungen, was zu einer ungenauen Siebeinstellung führt. Auch ist ein relativ hoher Demontageaufwand notwendig, wenn die Siebe beispielsweise zu Reinigungszwecken ausgebaut werden müssen.

In der DE 198 24 462 A wird ein selbstfahrender Mähdrescher beschrieben, bei dem die herausnehmbaren Lamellensiebe mit einer Feder ausgestattet sind, die die Lamellen selbsttätig in die Schließ- oder Offenstellung verbringt. Ein fest am Mähdrescher angebrachter Hebel kommt an einen mit der Verstellstange der Lamellen angebrachten Adapter zum Anliegen, wenn die Siebe in den Siebkasten eingebaut sind. Der Hebel kann somit den Adapter gegen die Wirkung der Feder in eine erste Richtung verschieben, um die Lamellen zu verstellen. Wird der Hebel in die gegenüberliegende Richtung verstellt, wird der Adapter durch die Wirkung der Feder zurückgeschoben. Diese Lösung erlaubt, das Sieb aus dem Siebkasten zu entnehmen, ohne eine Verbindung zwischen dem Hebel und dem Adapter zu lösen. Ein Nachteil liegt darin, dass sich die Siebe nicht mehr schließen bzw. öffnen lassen, wenn sie durch Verunreinigungen oder mechanische Ungenauigkeiten so schwer gehen, dass die Feder die Verstellstange nicht mehr bewegen kann. Ebenso ist es möglich, dass die Feder z. B. durch Gerstengrannen, die sich zwischen die Federwindungen setzen, außer Funktion gesetzt wird, so dass sich das Sieb auch bei Leichtgängigkeit der Lamellen nicht mehr schließen lässt.

Die SU 1 471 980 A und der Derwent-Abstract XP-002175217 beschreiben eine Reinigungseinrichtung für einen Mähdrescher, die einen Siebkasten und ein daraus herausnehmbares Sieb umfasst. Das Sieb wird durch einen Handgriff und eine drehbare Welle verstellt, die über ein Kegelradgetriebe eine andere Welle bewegt, die wiederum ein mit Gewinde ausgestattetes Ende aufweist, das mit einer Mutter zusammenwirkt. Die Mutter bewegt über eine Konsole eine Verstellstange, welche die Lamellen verstellt. Die Wellen, das Kegelradgetriebe und der Handgriff sind am Siebrahmen befestigt. Wird das Sieb aus dem Siebkasten entnommen, wird der gesamte Verstellantrieb mit abgenommen. Soll das Sieb ausgetauscht werden, ist auch der Verstellantrieb zu ersetzen, was kostenaufwändig ist.

Die nachveröffentlichte EP 1 068 793 A offenbart eine ähnliche Reinigungseinrichtung wie die SU 1 471 908 A, jedoch findet anstelle eines Handgriffs ein Elektromotor zur Verstellung der Lamellen Verwendung. Auch hier ist der Verstellantrieb fest mit dem Siebrahmen verbunden und wird mit dem Sieb aus dem Siebkasten entnommen.

Die der Erfindung zugrunde liegende Aufgabe wird darin gesehen, eine Reinigungseinrichtung mit einem einfach herausnehmbaren Sieb mit verstellbaren Lamellen zu verbessern.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung bezieht sich auf eine Reinigungseinrichtung eines Mähdreschers, die einen Siebkasten mit einem herausnehmbaren Sieb umfasst. Das Sieb weist einen Rahmen und darin verstellbar gelagerte Lamellen auf, die durch ein am Sieb angeordnetes Verstellelement bewegbar sind. Das Verstellelement ist durch ein ihm zugeordnetes Antriebselement bewegbar, das jedoch am Siebkasten angeordnet ist und nicht mit dem Sieb aus dem Siebkasten herausnehmbar ist. Die Antriebsverbindung zwischen Antriebselement und Verstellelement wird selbsttätig getrennt, wenn das Sieb ausgebaut wird, und beim Einbau des Siebs auch automatisch wieder geschlossen. Es wird vorgeschlagen, das Antriebselement so einzurichten, dass es das Verstellelement in zwei Richtungen bewegen kann. Das Verstellelement wird somit durch das Antriebselement in eine erste Richtung bewegt, um beispielsweise die Lamellen zu öffnen. Das Antriebselement bewegt das Verstellelement auch in die entgegengesetzte Richtung, um die Lamellen wieder zu schließen. Das Antriebselement ist somit eingerichtet, das Verstellelement aktiv in zwei entgegengesetzten Richtungen anzutreiben. Eine Feder zum Zurückstellen des Verstellelements erübrigt sich.

Auf diese Weise erreicht man, dass eine Verstellung der Lamellen ausschließlich durch das Antriebselement erfolgt, so dass die Feder eingespart wird und das Sieb auch bei schwergängigen Lamellen einstellbar bleibt.

Die Art der Kraftübertragung vom Antriebselement auf das Verstellelement ist grundsätzlich beliebig. Sie kann beispielsweise kraftschlüssig durch ein Antriebselement in Form eines Reibrads erfolgen, das mit einer Reibfläche oder einem Reibrad des Verstellelements zusammenwirkt. Bevorzugt ist aber eine formschlüssige Kraftübertragung, die beispielsweise durch ein Antriebselement in Form eines Zahnrads erfolgen kann, das mit einem Zahnrad oder einer Zahnstange zusammenwirkt. Auch ein Antriebselement in Form eines Schneckenrads kann ein Zahnrad oder eine Zahnstange bewegen. Ist das Verstellelement drehbar, also ein Zahn- oder Reibrad, kann am Sieb eine Umsetzung der Drehbewegung in eine Schwenkbewegung der Lamellen erfolgen, was beispielsweise durch zwei zusammenwirkende Gewinde geschehen kann, die eine Verstellstange antreiben. Wegen des einfacheren Aufbaus ist jedoch bevorzugt, dass das Verstellelement eine Zahnstange aufweist, oder selbst als Zahnstange ausgebildet ist, die direkt eine zur Verstellung einer mit den Lamellen gekoppelten Verstellstange geeignete Bewegung bereitstellt. Das Zahnrad bzw. das Schneckenrad ist dann stationär am Siebkasten angeordnet. Die beschriebenen Kraftübertragungsmechanismen trennen sich beim Herausnehmen des Siebs aus dem Siebkasten selbsttätig und ohne zusätzlichen Montageaufwand auf, schließen sich beim Einbau des Siebs selbsttätig wieder und arbeiten spielarm.

Die Siebe der Reinigungseinrichtung sind mit einer Vielzahl sich normalerweise quer zur Fahrtrichtung des Mähdreschers erstreckender Lamellen versehen. In der Regel ist jede Lamelle mit einer Kurbelwelle ausgestattet, die einen Kurbelarm aufweist, um die Winkelstellung der Lamelle einzustellen. Die Kurbelarme sind in Schlitzen aufgenommen, die sich in einer axial (d. h. längs der Vorwärtsfahrtrichtung) erstreckenden Verstellstange befinden. Durch eine - durch das Verstellelement bewirkte - Bewegung der Verstellstange nach vorn bzw. hinten wird der Winkel der Lamellen und die sich zwischen ihnen ergebende Öffnung verändert. Es ist aber auch denkbar, die Verstellstange zu drehen und die Drehung durch geeignete Mechanismen in eine Verschiebebewegung der Lamellen umzusetzen.

Das Antriebselement kann durch einen z. B. elektrisch, hydraulisch oder pneumatisch betriebenen Motor angetrieben werden, obwohl auch ein manueller Antrieb denkbar ist. Letzterer kann insbesondere von der Bedienerkabine aus über geeignete Kraftübertragungselemente erfolgen. Wird das Antriebselement motorisch bewegt, kann der Motor manuell durch entsprechende Schalter in der Bedienerkabine oder durch eine selbsttätige Steuer- oder Regeleinrichtung angesteuert werden.

Es bietet sich aus strömungstechnischen Gründen an, möglichst wenig Elemente des Antriebsstrangs des Antriebselements im Inneren des Siebkasten anzuordnen. In einer bevorzugten Ausführungsform ist daher nur das Antriebselement und eine ihm zugeordnete Welle im Siebkasten angeordnet. Die übrigen Elemente des Antriebsstrangs befinden sich dann außerhalb des Siebkastens.

Das Sieb ist vorzugsweise durch ein Halteelement im Siebkasten festgelegt. Nach Entfernen des Halteelements kann das Sieb - in der Regel nach hinten - aus dem Siebkasten herausgezogen oder - geschoben werden.

Das Herausschieben und Einziehen des Siebs kann durch das Antriebselement erfolgen. Nachdem das Halteelement entfernt wurde, wird das Antriebselement in Betrieb versetzt, das zunächst die Lamellen in die Schließ- bzw. Offenstellung verbringt. Sind die Lamellen geschlossen bzw. geöffnet, wirkt das Verstellelement vorzugsweise mit einem Anschlag zusammen, um nicht die Lamellen übermäßig zu belasten oder gar zu verformen. Da das Halteelement entfernt wurde, wird nunmehr das ganze Sieb aus dem Siebkasten herausgefahren. Das Einziehen des Siebs erfolgt in umgekehrter Richtung, ebenfalls durch das Antriebselement.

In den Zeichnungen ist ein nachfolgend näher beschriebenes Ausführungsbeispiel der Erfindung dargestellt. Es zeigt:
- Fig. 1: eine Seitenansicht eines landwirtschaftlichen Mähdreschers, in der die Dresch-, Trenn- und Reinigungszusammenbauten gezeigt sind,
- Fig. 2: eine seitlichen Ansicht des Siebs und des zugehörigen Einstellmechanismus,
- Fig. 3: eine rückseitige Ansicht des Siebs und des Einstellmechanismus.

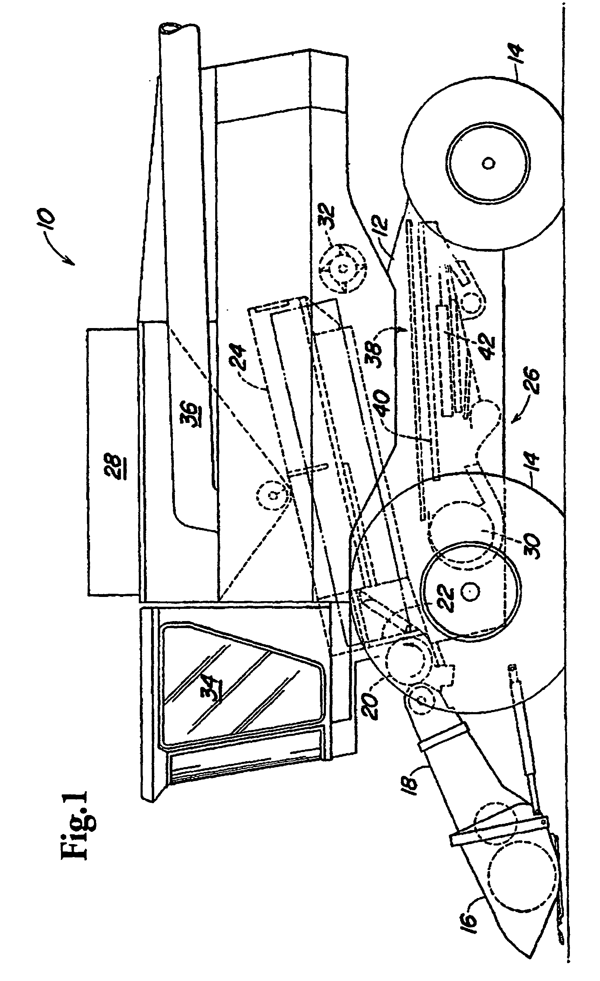

Voranzustellen ist, dass in der vorliegenden Offenbarung unter axialer Richtung die Vorwärtsfahrtrichtung des Mähdreschers verstanden wird. Figur 1 zeigt die Seitenansicht eines selbstfahrenden landwirtschaftlichen Mähdreschers 10. Der Mähdrescher 10 umfasst eine tragende Struktur 12 mit Rädern 14. Die tragende Struktur 12 umfasst zwei sich axial erstreckende Seitenbleche, zwischen denen die verschiedenen Verarbeitungseinrichtungen für das Erntegut angeordnet sind. Vom Mähdrescher 10 erstreckt sich ein Schneidwerk 16 nach vorn, das geerntetes Gut einem Schrägförderer 18 zuführt. Der Schrägförderer 18 führt das geerntete Gut den Dresch-, Trenn- und Reinigungseinrichtungen zu, die zwischen den Seitenblechen des Mähdreschers 10 angeordnet sind. Obwohl die vorliegende Erfindung als an einem Axialflussmähdrescher angebracht offenbart wird, kann sie auch an konventionellen Mähdreschern mit Strohschüttlern und einer Reinigungseinrichtung verwendet werden.

Bei dem dargestellten Mähdrescher führt der Schrägförderer 18 das geerntete Gut einer sich quer erstreckenden Leittrommel 20 zu, die das Gut durch einen Einlassübergangsbereich 22 einer axialen Dresch- und Trenneinrichtung 24 zuführt. Korn und Spreu werden von der axialen Dresch- und Trenneinrichtung 24 einer Reinigungseinrichtung 26 zugeführt. Die Reinigungseinrichtung 26 führt das saubere Korn wiederum einem Korntank 28 zu und die Spreu wird durch das Reinigungsgebläse 30 an der Rückseite des Mähdreschers 10 hinaus geblasen. Erntegut, das weder Korn noch Spreu ist, wird von der axialen Dresch- und Trenneinrichtung 24 einer quer angeordneten Leittrommel 32 zugeführt, die das Material an der Rückseite des Mähdreschers 10 hinaus auf das Feld befördert. Zeitweise im Korntank 28 gespeichertes Erntegut kann durch Betätigung einer Entladeförderschnecke 36 durch einen Bediener in der Bedienerkabine 34 entladen werden. Die Dreschund Trenneinrichtung 24 und die Reinigungseinrichtung 26 sind zwischen den Seitenblechen der tragenden Struktur 12 angeordnet.

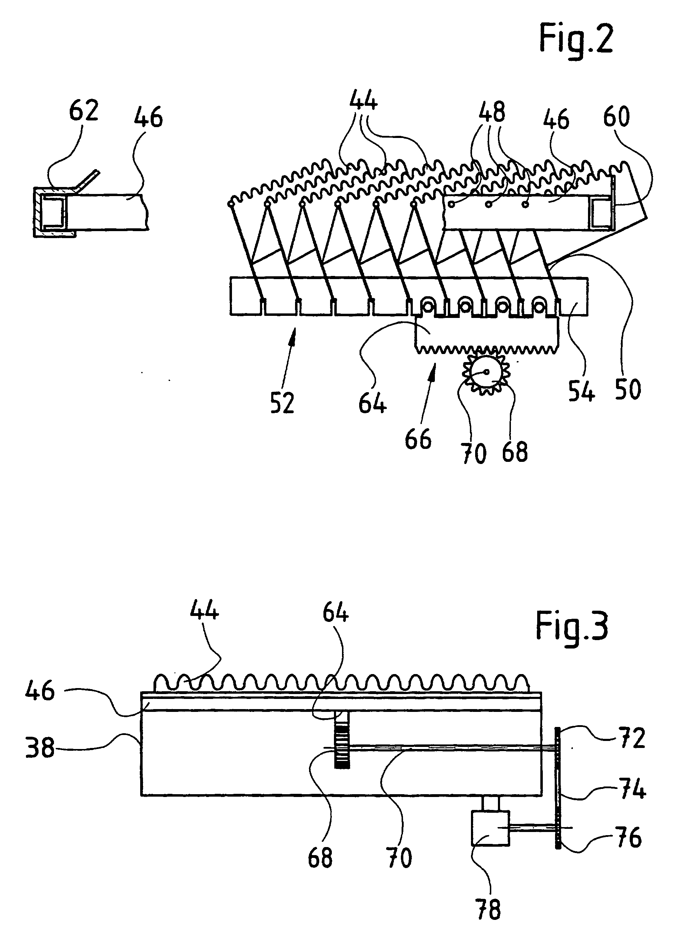

Die vorliegende Erfindung bezieht sich auf einen Mechanismus zum Einstellen der Lamellen 44 im Siebkasten 38 der Reinigungseinrichtung 26. Der Siebkasten 38 ist mit einem Obersieb 40 und einem Untersieb 42 ausgestattet. Das Obersieb 40 und das Untersieb 42 sind mit quer verlaufenden, einstellbaren Lamellen 44 versehen, die in Figur 2 gezeigt und in einem rechtwinkligen Rahmen 46 befestigt sind, der von den Seitenwänden des Siebkastens 38 getragen wird. Es wird auf Figur 2 verwiesen, gemäß der jede der Lamellen 44 mit einer Kurbelwelle 48 ausgestattet ist, die einen Kurbelarm 50 aufweist. Der Kurbelarm 50 ist in einem Schlitz 52 einer axialen Verstellstange 54 angeordnet. Durch eine axiale Bewegung der Verstellstange 54 kann die Winkelstellung aller Lamellen 44 des Obersiebs 40 oder aller Lamellen 44 des Untersiebs 42 eingestellt werden. Die Verstellstange 54 ist am Rahmen 46 (in einer in den Figuren nicht näher dargestellten Weise) verschiebbar gelagert. Wird die Verstellstange 54 in Fahrtrichtung, d. h. in der Figur 2 von rechts nach links, oder umgekehrt bewegt, dann werden die Kurbelwellen 48 der Lamellen 44 in ihren Lagern am Rahmen 46 gedreht und die Lamellen 44 verstellt. Dabei ändert sich der Abstand zwischen benachbarten Lamellenspitzen. Eine Verlagerung der Verstellstange 54 nach links bewirkt eine Verringerung des Abstandes und somit ein Schließen des Siebs 40 bzw. 42. Hingegen hat eine Verlagerung der Verstellstange 54 nach rechts ein Aufstellen der Lamellenspitzen und somit ein Öffnen des Siebs 40 bzw. 42 zur Folge.

An die Verstellstange 54 ist ein Verstellelement 64 angeschraubt, dessen Unterseite mit einer Zahnstange 66 ausgestattet ist. Es ist aber ebenso möglich, die Verstellstange 54 in geeigneter Weise selbst als Zahnstange auszubilden, so dass auf eine zusätzliche Zahnstange verzichtet werden kann. Die Längsrichtung der Zahnstange 66 verläuft in Fahrtrichtung, so dass die einzelnen Zähne quer zur Fahrtrichtung verlaufen. Mit der Zahnstange 66 des Verstellelements 64 kämmt ein Zahnrad 68, das um eine quer zur Fahrtrichtung verlaufende Welle 70 drehbar ist. Eine Drehung des Zahnrads 68 um die Welle bewirkt somit eine Verschiebung des Verstellelements 64 in oder entgegen der Fahrtrichtung (in Figur 2 nach links oder rechts), so dass eine Verstellung des Abstandes zwischen benachbarten Lamellenspitzen erreicht wird.

Um zu verhindern, dass sich die Zahnstange 66 (oder eine verzahnte Verstellstange 54) beim Betrieb mit Verunreinigungen zusetzt, die ihre Funktion beeinträchtigen könnten, wäre eine unterseitig geschlitzte, mit überlappenden, flexiblen Dichtungslippen versehene Einkapselung der Zahnstange 66 denkbar, die an der Zahnstange 66 befestigt ist und mit dem Sieb 40, 42 aus dem Siebkasten 38 entnommen wird. Aus strömungstechnischen Gesichtspunkten ist die Einkapselung möglichst klein zu gestalten. Alternativ oder zusätzlich ist denkbar, das Zahnrad 68 gelegentlich in Drehung zu versetzen, um die Länge der Zahnstange 66 abzufahren und Verunreinigungen zu entfernen. Um den Betrieb des Mähdreschers 10 nicht zu beeinträchtigen, kann ein Sensor vorgesehen werden, der fehlenden Gutfluss - z. B. beim Wenden am Ende des Felds oder bei einer Straßenfahrt - erkennt und den Motor 78 in Betrieb versetzt.

Anhand der Figur 3 ist erkennbar, dass das Zahnrad 68 über einen Antriebsstrang angetrieben wird, der die Welle 70, ein erstes Ritzel 72, eine Kette 74, ein zweites Ritzel 76 und einen Motor 78 umfasst. Das erste Ritzel 72 sitzt außerhalb einer seitlichen Wand des Siebkastens 38 auf der quer zur Fahrtrichtung angeordneten Welle 70. Die Kette 74 läuft um die beiden Ritzel 72, 76 um, und der Motor 78 ist eingerichtet, das zweite Ritzel 76 in Drehung zu versetzen. Anstelle der Kette 74 kann auch ein glatter oder verzahnter Riemen Verwendung finden, der mit entsprechenden Ritzeln 72, 76 zusammenwirkt. Der Motor 78 ist somit eingerichtet, über den Antriebsstrang das Zahnrad 68 in Drehung zu versetzen. Der Motor 78 ist vorzugsweise ein Elektromotor. Er kann manuell oder durch eine automatische Steuerung bzw. Regelung der Reinigungseinrichtung 26 angesteuert werden.

Soll zu Reparatur-, Revisions- oder Reinigungszwecken der Rahmen 46 des Siebs 40 bzw. 42 aus dem Siebkasten 38 ausgebaut werden, so muss lediglich ein rückwärtiges, schematisch dargestelltes Halteelement 60 aus der Ebene des Rahmens 46 entfernt werden, so dass der Rahmen 46 aus einer Halterung 62 am Siebkasten 38 nach hinten herausgezogen werden kann. Mit dem Rahmen 46 wird auch das Verstellelement 64 aus dem Siebkasten 38 entfernt. Das Zahnrad 68 und der zugehörige Antriebsstrang verbleiben jedoch im Siebkasten 38. Die Antriebsverbindung zwischen der unterseitigen Zahnstange 66 des Verstellelements 64 und dem Zahnrad 68 ist durch leichtes Anheben des Rahmens 46 problemlos lösbar und wird nach Wiedereinbau des Obersiebs 40 bzw. Untersiebs 42 selbsttätig und spielarm wieder hergestellt. Alternativ kann das Zahnrad 68 nach unten verstellt werden, um das Sieb unproblematisch herausziehen zu können, wenn im Siebkasten 38 nach oben geschlossene seitliche Führungsschienen vorhanden sind.

Ist das Verstellelement 64 hinreichend lang dimensioniert (oder die Verstellstange 54 als Zahnstange ausgebildet), kann der Motor 78 auch zum Ausschieben bzw. Einziehen des Untersiebs 42 bzw. Obersiebs 40 dienen. In diesem Fall wird das Halteelement 60 entfernt und der Motor 78 in Drehung versetzt, so dass sich das Zahnrad 68 in Figur 2 im Uhrzeigersinn dreht. Zunächst werden die Lamellen 44 in die Offenstellung verbracht, bis die Verstellstange 54 an einen (nicht eingezeichneten) Anschlag am Rahmen 46 anschlägt. Nunmehr wird der Rahmen 46 durch das vom Zahnrad 68 vorgetriebene Verstellelement 64 nach hinten aus dem Siebkasten 38 hinausgeschoben. Um ein Verkanten des Rahmens 46 im Siebkasten 38 zu vermeiden, können geeignete, vorzugsweise wälzgelagerte Führungen zwischen Siebkasten 38 und Rahmen 46 vorgesehen sein.

Das Einziehen des Rahmens 46 erfolgt in umgekehrter Weise, wobei das Verstellelement 64 die Verstellstange 54 zunächst an einen der Schließstellung der Lamellen 44 entsprechenden Anschlag ziehen wird, bevor der Rahmen 46 in den Siebkasten 38 eingezogen wird.

Um zu erreichen, das die Lamellen 44 bei einer bestimmten Stellung des Zahnrads 68 eine definierte Position einnehmen, können entsprechende Markierungen am Zahnrad 68 und am Verstellelement 64 erreicht werden. Der Bediener stellt die Lamellen 44 bzw. die Verstellstange 54 bei gelöster Antriebsverbindung zwischen Zahnrad 68 und Zahnstange 66 (z. B. bei angehobenem Rahmen 46 oder abgesenkten Zahnrad 58) so ein, dass die Markierungen übereinstimmen. Dadurch erreicht man, dass die Lamellen 44 bei bekannter Stellung des Motors 78 eine ebenfalls bekannte Position haben. Statt der Markierungen können auch mechanische Einrichtungen - z. B. Doppelzähne - vorgesehen sein, die ein Einrasten des Zahnrads 68 in die Zahnstange 66 nur in einer definierten Stellung erlauben. Sind entsprechende Sensoren (Lichtschranken, Ultraschallsensoren, etc.) vorhanden, die die tatsächliche Sieböffnung ermitteln können, erübrigen sich die beschriebenen Maßnahmen.

Anzumerken ist, dass (alternativ zu der oben genannten mechanischen Lösung) einer selbsttätigen Steuer- bzw. Regeleinrichtung für die Sieböffnung eine Information über die jeweilige Stellung der Lamellen 44 zugeführt werden kann. Diese Information kann über einen entsprechenden, z. B. am Siebkasten 38 oder Rahmen 46 angeordneten Sensor gewonnen werden, der mit der Verstellstange 54 zusammenwirkt und ihre Stellung erfasst. Beispielsweise kann ein verschiebbares Potentiometer benutzt werden, dessen Schieber mit der Verstellstange 54 zusammenwirkt. Denkbar ist auch, den Motor anzutreiben, so dass er die Lamellen 44 in Richtung auf ihre Offen- oder Schließstellung zu bewegt. Das Erreichen des Anschlags der Verstellstange 54 in Offen- bzw. Schließstellung wird durch einen (aufgrund der Blockierung der Verstellstange 54 am Anschlag) erhöhten Betriebsstrom des Motors erkannt. Anschließend kann der Motor eine der gewünschten Stellung der Lamellen 44 entsprechende, vorbestimmte Zeit in den Betriebsmodus versetzt werden, falls ein Gleichstrommotor Verwendung findet. Es kann auch ein Schrittmotor benutzt werden, der entsprechend der gewünschten Stellung der Lamellen 44 mit Antriebssignalen beaufschlagt wird. Eine ebenfalls denkbare Möglichkeit ist die Verwendung eines Motors 78 mit eingebautem Sensor, der zwischen den Endlagen kalibriert wird.

### Beschreibung für folgenden Vertragsstaat: DE

Die Erfindung betrifft eine Reinigungseinrichtung für einen landwirtschaftlichen Mähdrescher, mit einem Siebkasten und mindestens einem aus dem Siebkasten herausnehmbaren Sieb, das einen Rahmen, darin angeordnete, verstellbare Lamellen sowie ein Verstellelement zur Verstellung der Lamellen aufweist, wobei am Siebkasten ein Antriebselement zur Verstellung des Verstellelements angeordnet und das Sieb ohne Demontage einer Verbindung zwischen Antriebselement und Verstellelement aus dem Siebkasten herausnehmbar ist und das Antriebselement nicht mit dem Sieb aus dem Siebkasten herausnehmbar ist.

In einer Erntemaschine, wie einem Mähdrescher, ist in der Regel nach dem Dreschen und Trennen noch etwas Spreu und Stroh mit dem Korn vermischt. Die Reinigungseinrichtung entfernt diese Verunreinigungen aus dem Korn. Bei den meisten Mähdreschern enthält die Reinigungseinrichtung drei Hauptkomponenten: ein Gebläse, ein Obersieb und ein Untersieb. Das Gebläse weist ein eigenes Gehäuse auf, während das Obersieb und das Untersieb an einem Siebkasten angebracht sind.

Ein einstellbares Sieb ist aus einer Reihe sich quer erstreckender Lamellen mit Reihen von Zähnen aufgebaut. Jede dieser Lamellen ist an einer Kurbelwelle befestigt, die einen Kurbelarm aufweist, der sich im Eingriff mit einer sich axial erstreckenden Verstellstange befindet. Durch ein axiales Verschieben der Verstellstange werden alle Lamellen gleichzeitig bewegt.

Das einstellbare Obersieb und Untersieb werden abhängig von den Erntegutbedingungen eingestellt. Die Lamellen des Obersiebs werden so weit geöffnet oder geschlossen, dass das Korn durch das Obersieb fällt, bevor es sich über die Länge des Obersiebs bewegt. Wenn das Obersieb zu weit geöffnet wird, kann es das Untersieb mit Spreu überlasten. Wenn das Obersieb nicht weit genug geöffnet wird und das Korn nicht abgeschieden werden kann, gelangt dieses zunächst auf die Obersiebverlängerung, was zu einer Überlastung der Überkehr führen kann. Können die Körner infolge zu weit geschlossener Siebe auch dort nicht abgeschieden werden, gelangen diese über das Siebende hinaus als Reinigungsverluste aus der Maschine hinaus auf das Feld. Die Lamellen des Untersiebs müssen weit genug geöffnet werden, um den Körnern des Getreides zu ermöglichen, leicht durch sie hindurch zu fallen, aber nicht so weit, dass Stroh und Spreu hindurch fallen können.

Bei vielen Mähdreschern muss ein Bediener in Abhängigkeit von der jeweiligen Fruchtart und Erntebedingungen an der Rückseite des Mähdreschers zwischen die Seitenbleche greifen, um diese Einstellungen an am Sieb angebrachten Handhebeln durchzuführen. Das macht die Einstellungen beschwerlich und zeitaufwändig. Den handbetätigten Verstelleinrichtungen mit Gestängen ist gemeinsam, dass die Betätigungselemente zur Vermeidung unnötiger Umlenkungen im Siebkasten angebracht sind und somit eine Gefahr für Verstopfungen bilden und darüber hinaus auch die Windführung im Siebkasten beeinträchtigen können.

Verschiedene fernbedienbare Einstellmechanismen wurden vorgeschlagen. Die US 4 897 027 A offenbart einen Kabelantriebsmechanismus, der einem Bediener erlaubt, den Winkel der Lamellen vom Platz eines Bedieners aus einzustellen. Die US 5 586 033 A offenbart ein Gerät, das die Lamellen durch einen motorisch angetriebenen Kabelmechanismus zur selbsttätigen Steuerung antreibt. Ein Nachteil dieser Siebverstellungen liegt im Spiel der Betätigungseinrichtungen, was zu einer ungenauen Siebeinstellung führt. Auch ist ein relativ hoher Demontageaufwand notwendig, wenn die Siebe beispielsweise zu Reinigungszwecken ausgebaut werden müssen.

In der DE 198 24 462 A wird ein selbstfahrender Mähdrescher beschrieben, bei dem die herausnehmbaren Lamellensiebe mit einer Feder ausgestattet sind, die die Lamellen selbsttätig in die Schließ- oder Offenstellung verbringt. Ein fest am Mähdrescher angebrachter Hebel kommt an einen mit der Verstellstange der Lamellen angebrachten Adapter zum Anliegen, wenn die Siebe in den Siebkasten eingebaut sind. Der Hebel kann somit den Adapter gegen die Wirkung der Feder in eine erste Richtung verschieben, um die Lamellen zu verstellen. Wird der Hebel in die gegenüberliegende Richtung verstellt, wird der Adapter durch die Wirkung der Feder zurückgeschoben. Diese Lösung erlaubt, das Sieb aus dem Siebkasten zu entnehmen, ohne eine Verbindung zwischen dem Hebel und dem Adapter zu lösen. Ein Nachteil liegt darin, dass sich die Siebe nicht mehr schließen bzw. öffnen lassen, wenn sie durch Verunreinigungen oder mechanische Ungenauigkeiten so schwer gehen, dass die Feder die Verstellstange nicht mehr bewegen kann. Ebenso ist es möglich, dass die Feder z. B. durch Gerstengrannen, die sich zwischen die Federwindungen setzen, außer Funktion gesetzt wird, so dass sich das Sieb auch bei Leichtgängigkeit der Lamellen nicht mehr schließen lässt.

Die SU 1 471 980 A und der Derwent-Abstract XP-002175217 beschreiben eine Reinigungseinrichtung für einen Mähdrescher, die einen Siebkasten und ein daraus herausnehmbares Sieb umfasst. Das Sieb wird durch einen Handgriff und eine drehbare Welle verstellt, die über ein Kegelradgetriebe eine andere Welle bewegt, die wiederum ein mit Gewinde ausgestattetes Ende aufweist, das mit einer Mutter zusammenwirkt. Die Mutter bewegt über eine Konsole eine Verstellstange, welche die Lamellen verstellt. Die Wellen, das Kegelradgetriebe und der Handgriff sind am Siebrahmen befestigt. Wird das Sieb aus dem Siebkasten entnommen, wird der gesamte Verstellantrieb mit abgenommen. Soll das Sieb ausgetauscht werden, ist auch der Verstellantrieb zu ersetzen, was kostenaufwändig ist.

Die nachveröffentlichte EP 1 068 793 A offenbart eine ähnliche Reinigungseinrichtung wie die SU 1 471 908 A, jedoch findet anstelle eines Handgriffs ein Elektromotor zur Verstellung der Lamellen Verwendung. Auch hier ist der Verstellantrieb fest mit dem Siebrahmen verbunden und wird mit dem Sieb aus dem Siebkasten entnommen.

In der nachveröffentlichten DE 100 25 030 A wird eine Reinigungseinrichtung für einen Mähdrescher beschrieben, bei der ein mit dem Siebkasten verbundener Antrieb lösbar und kraftschlüssig mit einem Verstellelement zur Verstellung der Lamellen des Siebs verbunden ist. Beim Ausbau des Siebs verbleibt der Antrieb am Siebkasten, während das Sieb mit dem Verstellelement ausgebaut wird. Das Verstellelement ist unterhalb bzw. in Fahrtrichtung vor oder hinter dem mit ihm zusammenwirkenden Element des Antriebs angeordnet.

Die der Erfindung zugrunde liegende Aufgabe wird darin gesehen, eine Reinigungseinrichtung mit einem einfach herausnehmbaren Sieb mit verstellbaren Lamellen zu verbessern.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung bezieht sich auf eine Reinigungseinrichtung eines Mähdreschers, die einen Siebkasten mit einem herausnehmbaren Sieb umfasst. Das Sieb weist einen Rahmen und darin verstellbar gelagerte Lamellen auf, die durch ein am Sieb angeordnetes Verstellelement bewegbar sind. Das Verstellelement ist durch ein ihm zugeordnetes Antriebselement bewegbar, das jedoch am Siebkasten angeordnet ist und nicht mit dem Sieb aus dem Siebkasten herausnehmbar ist. Die Antriebsverbindung zwischen Antriebselement und Verstellelement wird selbsttätig getrennt, wenn das Sieb ausgebaut wird, und beim Einbau des Siebs auch automatisch wieder geschlossen. Es wird vorgeschlagen, das Antriebselement so einzurichten, dass es das Verstellelement in zwei Richtungen bewegen kann. Das Verstellelement wird somit durch das Antriebselement in eine erste Richtung bewegt, um beispielsweise die Lamellen zu öffnen. Das Antriebselement bewegt das Verstellelement auch in die entgegengesetzte Richtung, um die Lamellen wieder zu schließen. Das Antriebselement ist somit eingerichtet, das Verstellelement aktiv in zwei entgegengesetzten Richtungen anzutreiben. Eine Feder zum Zurückstellen des Verstellelements erübrigt sich. Auf diese Weise erreicht man, dass eine Verstellung der Lamellen ausschließlich durch das Antriebselement erfolgt, so dass die Feder eingespart wird und das Sieb auch bei schwergängigen Lamellen einstellbar bleibt. Die Antriebsverbindung zwischen dem Antriebselement und dem Verstellelement ist durch Anheben des Rahmens lösbar.

Die Art der Kraftübertragung vom Antriebselement auf das Verstellelement ist grundsätzlich beliebig. Sie kann beispielsweise kraftschlüssig durch ein Antriebselement in Form eines Reibrads erfolgen, das mit einer Reibfläche oder einem Reibrad des Verstellelements zusammenwirkt. Bevorzugt ist aber eine formschlüssige Kraftübertragung, die beispielsweise durch ein Antriebselement in Form eines Zahnrads erfolgen kann, das mit einem Zahnrad oder einer Zahnstange zusammenwirkt. Auch ein Antriebselement in Form eines Schneckenrads kann ein Zahnrad oder eine Zahnstange bewegen. Ist das Verstellelement drehbar, also ein Zahn- oder Reibrad, kann am Sieb eine Umsetzung der Drehbewegung in eine Schwenkbewegung der Lamellen erfolgen, was beispielsweise durch zwei zusammenwirkende Gewinde geschehen kann, die eine Verstellstange antreiben. Wegen des einfacheren Aufbaus ist jedoch bevorzugt, dass das Verstellelement eine Zahnstange aufweist, oder selbst als Zahnstange ausgebildet ist, die direkt eine zur Verstellung einer mit den Lamellen gekoppelten Verstellstange geeignete Bewegung bereitstellt. Das Zahnrad bzw. das Schneckenrad ist dann stationär am Siebkasten angeordnet. Die beschriebenen Kraftübertragungsmechanismen trennen sich beim Herausnehmen des Siebs aus dem Siebkasten selbsttätig und ohne zusätzlichen Montageaufwand auf, schließen sich beim Einbau des Siebs selbsttätig wieder und arbeiten spielarm.

Die Siebe der Reinigungseinrichtung sind mit einer Vielzahl sich normalerweise quer zur Fahrtrichtung des Mähdreschers erstreckender Lamellen versehen. In der Regel ist jede Lamelle mit einer Kurbelwelle ausgestattet, die einen Kurbelarm aufweist, um die Winkelstellung der Lamelle einzustellen. Die Kurbelarme sind in Schlitzen aufgenommen, die sich in einer axial (d. h. längs der Vorwärtsfahrtrichtung) erstreckenden Verstellstange befinden. Durch eine - durch das Verstellelement bewirkte - Bewegung der Verstellstange nach vorn bzw. hinten wird der Winkel der Lamellen und die sich zwischen ihnen ergebende Öffnung verändert. Es ist aber auch denkbar, die Verstellstange zu drehen und die Drehung durch geeignete Mechanismen in eine Verschiebebewegung der Lamellen umzusetzen.

Das Antriebselement kann durch einen z. B. elektrisch, hydraulisch oder pneumatisch betriebenen Motor angetrieben werden, obwohl auch ein manueller Antrieb denkbar ist. Letzterer kann insbesondere von der Bedienerkabine aus über geeignete Kraftübertragungselemente erfolgen. Wird das Antriebselement motorisch bewegt, kann der Motor manuell durch entsprechende Schalter in der Bedienerkabine oder durch eine selbsttätige Steuer- oder Regeleinrichtung angesteuert werden.

Es bietet sich aus strömungstechnischen Gründen an, möglichst wenig Elemente des Antriebsstrangs des Antriebselements im Inneren des Siebkasten anzuordnen. In einer bevorzugten Ausführungsform ist daher nur das Antriebselement und eine ihm zugeordnete Welle im Siebkasten angeordnet. Die übrigen Elemente des Antriebsstrangs befinden sich dann außerhalb des Siebkastens.

Das Sieb ist vorzugsweise durch ein Halteelement im Siebkasten festgelegt. Nach Entfernen des Halteelements kann das Sieb - in der Regel nach hinten - aus dem Siebkasten herausgezogen oder - geschoben werden.

Das Herausschieben und Einziehen des Siebs kann durch das Antriebselement erfolgen. Nachdem das Halteelement entfernt wurde, wird das Antriebselement in Betrieb versetzt, das zunächst die Lamellen in die Schließ- bzw. Offenstellung verbringt. Sind die Lamellen geschlossen bzw. geöffnet, wirkt das Verstellelement vorzugsweise mit einem Anschlag zusammen, um nicht die Lamellen übermäßig zu belasten oder gar zu verformen. Da das Halteelement entfernt wurde, wird nunmehr das ganze Sieb aus dem Siebkasten herausgefahren. Das Einziehen des Siebs erfolgt in umgekehrter Richtung, ebenfalls durch das Antriebselement.

In den Zeichnungen ist ein nachfolgend näher beschriebenes Ausführungsbeispiel der Erfindung dargestellt. Es zeigt:
- Fig. 1: eine Seitenansicht eines landwirtschaftlichen Mähdreschers, in der die Dresch-, Trenn- und Reinigungszusammenbauten gezeigt sind,
- Fig. 2: eine seitlichen Ansicht des Siebs und des zugehörigen Einstellmechanismus,
- Fig. 3: eine rückseitige Ansicht des Siebs und des Einstellmechanismus.

Voranzustellen ist, dass in der vorliegenden Offenbarung unter axialer Richtung die Vorwärtsfahrtrichtung des Mähdreschers verstanden wird. Figur 1 zeigt die Seitenansicht eines selbstfahrenden landwirtschaftlichen Mähdreschers 10. Der Mähdrescher 10 umfasst eine tragende Struktur 12 mit Rädern 14. Die tragende Struktur 12 umfasst zwei sich axial erstreckende Seitenbleche, zwischen denen die verschiedenen Verarbeitungseinrichtungen für das Erntegut angeordnet sind. Vom Mähdrescher 10 erstreckt sich ein Schneidwerk 16 nach vorn, das geerntetes Gut einem Schrägförderer 18 zuführt. Der Schrägförderer 18 führt das geerntete Gut den Dresch-, Trenn- und Reinigungseinrichtungen zu, die zwischen den Seitenblechen des Mähdreschers 10 angeordnet sind. Obwohl die vorliegende Erfindung als an einem Axialflussmähdrescher angebracht offenbart wird, kann sie auch an konventionellen Mähdreschern mit Strohschüttlern und einer Reinigungseinrichtung verwendet werden.

Bei dem dargestellten Mähdrescher führt der Schrägförderer 18 das geerntete Gut einer sich quer erstreckenden Leittrommel 20 zu, die das Gut durch einen Einlassübergangsbereich 22 einer axialen Dresch- und Trenneinrichtung 24 zuführt. Korn und Spreu werden von der axialen Dresch- und Trenneinrichtung 24 einer Reinigungseinrichtung 26 zugeführt. Die Reinigungseinrichtung 26 führt das saubere Korn wiederum einem Korntank 28 zu und die Spreu wird durch das Reinigungsgebläse 30 an der Rückseite des Mähdreschers 10 hinaus geblasen. Erntegut, das weder Korn noch Spreu ist, wird von der axialen Dresch- und Trenneinrichtung 24 einer quer angeordneten Leittrommel 32 zugeführt, die das Material an der Rückseite des Mähdreschers 10 hinaus auf das Feld befördert. Zeitweise im Korntank 28 gespeichertes Erntegut kann durch Betätigung einer Entladeförderschnecke 36 durch einen Bediener in der Bedienerkabine 34 entladen werden. Die Dreschund Trenneinrichtung 24 und die Reinigungseinrichtung 26 sind zwischen den Seitenblechen der tragenden Struktur 12 angeordnet.

Die vorliegende Erfindung bezieht sich auf einen Mechanismus zum Einstellen der Lamellen 44 im Siebkasten 38 der Reinigungseinrichtung 26. Der Siebkasten 38 ist mit einem Obersieb 40 und einem Untersieb 42 ausgestattet. Das Obersieb 40 und das Untersieb 42 sind mit quer verlaufenden, einstellbaren Lamellen 44 versehen, die in Figur 2 gezeigt und in einem rechtwinkligen Rahmen 46 befestigt sind, der von den Seitenwänden des Siebkastens 38 getragen wird. Es wird auf Figur 2 verwiesen, gemäß der jede der Lamellen 44 mit einer Kurbelwelle 48 ausgestattet ist, die einen Kurbelarm 50 aufweist. Der Kurbelarm 50 ist in einem Schlitz 52 einer axialen Verstellstange 54 angeordnet. Durch eine axiale Bewegung der Verstellstange 54 kann die Winkelstellung aller Lamellen 44 des Obersiebs 40 oder aller Lamellen 44 des Untersiebs 42 eingestellt werden. Die Verstellstange 54 ist am Rahmen 46 (in einer in den Figuren nicht näher dargestellten Weise) verschiebbar gelagert. Wird die Verstellstange 54 in Fahrtrichtung, d. h. in der Figur 2 von rechts nach links, oder umgekehrt bewegt, dann werden die Kurbelwellen 48 der Lamellen 44 in ihren Lagern am Rahmen 46 gedreht und die Lamellen 44 verstellt. Dabei ändert sich der Abstand zwischen benachbarten Lamellenspitzen. Eine Verlagerung der Verstellstange 54 nach links bewirkt eine Verringerung des Abstandes und somit ein Schließen des Siebs 40 bzw. 42. Hingegen hat eine Verlagerung der Verstellstange 54 nach rechts ein Aufstellen der Lamellenspitzen und somit ein Öffnen des Siebs 40 bzw. 42 zur Folge.

An die Verstellstange 54 ist ein Verstellelement 64 angeschraubt, dessen Unterseite mit einer Zahnstange 66 ausgestattet ist. Es ist aber ebenso möglich, die Verstellstange 54 in geeigneter Weise selbst als Zahnstange auszubilden, so dass auf eine zusätzliche Zahnstange verzichtet werden kann. Die Längsrichtung der Zahnstange 66 verläuft in Fahrtrichtung, so dass die einzelnen Zähne quer zur Fahrtrichtung verlaufen. Mit der Zahnstange 66 des Verstellelements 64 kämmt ein Zahnrad 68, das um eine quer zur Fahrtrichtung verlaufende Welle 70 drehbar ist. Eine Drehung des Zahnrads 68 um die Welle bewirkt somit eine Verschiebung des Verstellelements 64 in oder entgegen der Fahrtrichtung (in Figur 2 nach links oder rechts), so dass eine Verstellung des Abstandes zwischen benachbarten Lamellenspitzen erreicht wird.

Um zu verhindern, dass sich die Zahnstange 66 (oder eine verzahnte Verstellstange 54) beim Betrieb mit Verunreinigungen zusetzt, die ihre Funktion beeinträchtigen könnten, wäre eine unterseitig geschlitzte, mit überlappenden, flexiblen Dichtungslippen versehene Einkapselung der Zahnstange 66 denkbar, die an der Zahnstange 66 befestigt ist und mit dem Sieb 40, 42 aus dem Siebkasten 38 entnommen wird. Aus strömungstechnischen Gesichtspunkten ist die Einkapselung möglichst klein zu gestalten. Alternativ oder zusätzlich ist denkbar, das Zahnrad 68 gelegentlich in Drehung zu versetzen, um die Länge der Zahnstange 66 abzufahren und Verunreinigungen zu entfernen. Um den Betrieb des Mähdreschers 10 nicht zu beeinträchtigen, kann ein Sensor vorgesehen werden, der fehlenden Gutfluss - z. B. beim Wenden am Ende des Felds oder bei einer Straßenfahrt - erkennt und den Motor 78 in Betrieb versetzt.

Anhand der Figur 3 ist erkennbar, dass das Zahnrad 68 über einen Antriebsstrang angetrieben wird, der die Welle 70, ein erstes Ritzel 72, eine Kette 74, ein zweites Ritzel 76 und einen Motor 78 umfasst. Das erste Ritzel 72 sitzt außerhalb einer seitlichen Wand des Siebkastens 38 auf der quer zur Fahrtrichtung angeordneten Welle 70. Die Kette 74 läuft um die beiden Ritzel 72, 76 um, und der Motor 78 ist eingerichtet, das zweite Ritzel 76 in Drehung zu versetzen. Anstelle der Kette 74 kann auch ein glatter oder verzahnter Riemen Verwendung finden, der mit entsprechenden Ritzeln 72, 76 zusammenwirkt. Der Motor 78 ist somit eingerichtet, über den Antriebsstrang das Zahnrad 68 in Drehung zu versetzen. Der Motor 78 ist vorzugsweise ein Elektromotor. Er kann manuell oder durch eine automatische Steuerung bzw. Regelung der Reinigungseinrichtung 26 angesteuert werden.

Soll zu Reparatur-, Revisions- oder Reinigungszwecken der Rahmen 46 des Siebs 40 bzw. 42 aus dem Siebkasten 38 ausgebaut werden, so muss lediglich ein rückwärtiges, schematisch dargestelltes Halteelement 60 aus der Ebene des Rahmens 46 entfernt werden, so dass der Rahmen 46 aus einer Halterung 62 am Siebkasten 38 nach hinten herausgezogen werden kann. Mit dem Rahmen 46 wird auch das Verstellelement 64 aus dem Siebkasten 38 entfernt. Das Zahnrad 68 und der zugehörige Antriebsstrang verbleiben jedoch im Siebkasten 38. Die Antriebsverbindung zwischen der unterseitigen Zahnstange 66 des Verstellelements 64 und dem Zahnrad 68 ist durch leichtes Anheben des Rahmens 46 problemlos lösbar und wird nach Wiedereinbau des Obersiebs 40 bzw. Untersiebs 42 selbsttätig und spielarm wieder hergestellt. Alternativ kann das Zahnrad 68 nach unten verstellt werden, um das Sieb unproblematisch herausziehen zu können, wenn im Siebkasten 38 nach oben geschlossene seitliche Führungsschienen vorhanden sind.

Ist das Verstellelement 64 hinreichend lang dimensioniert (oder die Verstellstange 54 als Zahnstange ausgebildet), kann der Motor 78 auch zum Ausschieben bzw. Einziehen des Untersiebs 42 bzw. Obersiebs 40 dienen. In diesem Fall wird das Halteelement 60 entfernt und der Motor 78 in Drehung versetzt, so dass sich das Zahnrad 68 in Figur 2 im Uhrzeigersinn dreht. Zunächst werden die Lamellen 44 in die Offenstellung verbracht, bis die Verstellstange 54 an einen (nicht eingezeichneten) Anschlag am Rahmen 46 anschlägt. Nunmehr wird der Rahmen 46 durch das vom Zahnrad 68 vorgetriebene Verstellelement 64 nach hinten aus dem Siebkasten 38 hinausgeschoben. Um ein Verkanten des Rahmens 46 im Siebkasten 38 zu vermeiden, können geeignete, vorzugsweise wälzgelagerte Führungen zwischen Siebkasten 38 und Rahmen 46 vorgesehen sein.

Das Einziehen des Rahmens 46 erfolgt in umgekehrter Weise, wobei das Verstellelement 64 die Verstellstange 54 zunächst an einen der Schließstellung der Lamellen 44 entsprechenden Anschlag ziehen wird, bevor der Rahmen 46 in den Siebkasten 38 eingezogen wird.

Um zu erreichen, das die Lamellen 44 bei einer bestimmten Stellung des Zahnrads 68 eine definierte Position einnehmen, können entsprechende Markierungen am Zahnrad 68 und am Verstellelement 64 erreicht werden. Der Bediener stellt die Lamellen 44 bzw. die Verstellstange 54 bei gelöster Antriebsverbindung zwischen Zahnrad 68 und Zahnstange 66 (z. B. bei angehobenem Rahmen 46 oder abgesenkten Zahnrad 58) so ein, dass die Markierungen übereinstimmen. Dadurch erreicht man, dass die Lamellen 44 bei bekannter Stellung des Motors 78 eine ebenfalls bekannte Position haben. Statt der Markierungen können auch mechanische Einrichtungen - z. B. Doppelzähne - vorgesehen sein, die ein Einrasten des Zahnrads 68 in die Zahnstange 66 nur in einer definierten Stellung erlauben. Sind entsprechende Sensoren (Lichtschranken, Ultraschallsensoren, etc.) vorhanden, die die tatsächliche Sieböffnung ermitteln können, erübrigen sich die beschriebenen Maßnahmen.

Anzumerken ist, dass (alternativ zu der oben genannten mechanischen Lösung) einer selbsttätigen Steuer- bzw. Regeleinrichtung für die Sieböffnung eine Information über die jeweilige Stellung der Lamellen 44 zugeführt werden kann. Diese Information kann über einen entsprechenden, z. B. am Siebkasten 38 oder Rahmen 46 angeordneten Sensor gewonnen werden, der mit der Verstellstange 54 zusammenwirkt und ihre Stellung erfasst. Beispielsweise kann ein verschiebbares Potentiometer benutzt werden, dessen Schieber mit der Verstellstange 54 zusammenwirkt. Denkbar ist auch, den Motor anzutreiben, so dass er die Lamellen 44 in Richtung auf ihre Offen- oder Schließstellung zu bewegt. Das Erreichen des Anschlags der Verstellstange 54 in Offen- bzw. Schließstellung wird durch einen (aufgrund der Blockierung der Verstellstange 54 am Anschlag) erhöhten Betriebsstrom des Motors erkannt. Anschließend kann der Motor eine der gewünschten Stellung der Lamellen 44 entsprechende, vorbestimmte Zeit in den Betriebsmodus versetzt werden, falls ein Gleichstrommotor Verwendung findet. Es kann auch ein Schrittmotor benutzt werden, der entsprechend der gewünschten Stellung der Lamellen 44 mit Antriebssignalen beaufschlagt wird. Eine ebenfalls denkbare Möglichkeit ist die Verwendung eines Motors 78 mit eingebautem Sensor, der zwischen den Endlagen kalibriert wird.

## Patentansprüche (Patentansprüche für folgende(n) Vertragsstaat(en): BE, DK, FR, GB, IT)

1. Reinigungseinrichtung (26) für einen landwirtschaftlichen Mähdrescher (10), mit einem Siebkasten (38) und mindestens einem aus dem Siebkasten (38) herausnehmbaren Sieb, das einen Rahmen (46), darin angeordnete, verstellbare Lamellen (44) sowie ein Verstellelement (64) zur Verstellung der Lamellen (44) aufweist, das in beiden Verstellrichtungen formschlüssig mit den Lamellen (44) in Antriebsverbindung steht, wobei am Siebkasten (38) ein Antriebselement zur Verstellung des Verstellelements (64) angeordnet und das Sieb ohne Demontage einer Verbindung zwischen Antriebselement und Verstellelement (64) aus dem Siebkasten (38) herausnehmbar ist und das Antriebselement bei herausgenommenem Sieb am Siebkasten (38) verbleibt, **dadurch gekennzeichnet, dass** das Antriebselement eingerichtet ist, das Verstellelement (64) in zwei Richtungen zu bewegen.

2. Reinigungseinrichtung (26) nach Anspruch 1, **dadurch gekennzeichnet, dass** das Antriebselement ein Zahnrad (68) oder ein Schneckenrad ist, das mit einer Zahnstange (66) des Verstellelements (64) zusammenwirkt.

3. Reinigungseinrichtung (26) nach Anspruch 1 oder 2, **dadurch gekennzeichnet, dass** die Lamellen (44) sich quer zur Fahrtrichtung des Mähdreschers (10) erstrecken und mit einer verstellbaren Verstellstange (54) verbunden sind, die sich in der Fahrtrichtung des Mähdreschers (10) erstreckt, wobei das Verstellelement (64) eingerichtet ist, die Verstellstange (54) zu verstellen, insbesondere zu verschieben.

4. Reinigungseinrichtung nach Anspruch 2 oder 3, **dadurch gekennzeichnet, dass** die Zahnstange (66) eine in die Verstellstange (54) eingebrachte Verzahnung ist.

5. Reinigungseinrichtung (26) nach einem der vorhergehenden Ansprüche, **dadurch gekennzeichnet, dass** das Antriebselement durch einen elektrischen oder hydraulischen Motor (78) antreibbar ist.

6. Reinigungseinrichtung (26) nach einem der Ansprüche 1 bis 5, **dadurch gekennzeichnet, dass** nur das Antriebselement und eine drehbare Welle (70), die das Antriebselement mit dem Motor (78) verbindet, innerhalb des Siebkastens (38) angeordnet sind, und dass der Motor (78) und gegebenenfalls weitere Elemente des Antriebsstrangs des Antriebselements außerhalb des Siebkastens (38) angeordnet sind.

7. Reinigungseinrichtung (26) nach einem der Ansprüche 1 bis 6, **dadurch gekennzeichnet, dass** ein entfernbares Halteelement (60) an einer Seite des Rahmens (46) angeordnet ist, und dass das Sieb bei entferntem Halteelement (60) aus dem Siebkasten (38) herauszieh- bzw. -schiebbar ist.

8. Reinigungseinrichtung (26) nach einem der Ansprüche 1 bis 7, **dadurch gekennzeichnet, dass** das Sieb durch das Antriebselement aus dem Siebkasten (38) herausschiebbar bzw. in den Siebkasten (38) einziehbar ist.

9. Reinigungseinrichtung (26) nach einem der Ansprüche 1 bis 8, **dadurch gekennzeichnet, dass** das Verstellelement (64) bei Offen- bzw. Schließstellung der Lamellen (44) mit einem Anschlag zusammenwirkt.

10. Mähdrescher (10) mit einer Reinigungseinrichtung (26) nach einem der Ansprüche 1 bis 9.

## Patentansprüche (Patentansprüche für folgende(n) Vertragsstaat(en): DE)

1. Reinigungseinrichtung (26) für einen landwirtschaftlichen Mähdrescher (10), mit einem Siebkasten (38) und mindestens einem aus dem Siebkasten (38) herausnehmbaren Sieb, das einen Rahmen (46), darin angeordnete, verstellbare Lamellen (44) sowie ein Verstellelement (64) zur Verstellung der Lamellen (44) aufweist, das in beiden Verstellrichtungen formschlüssig mit den Lamellen (44) in Antriebsverbindung steht, wobei am Siebkasten (38) ein Antriebselement zur Verstellung des Verstellelements (64) angeordnet und das Sieb ohne Demontage einer Verbindung zwischen Antriebselement und Verstellelement (64) aus dem Siebkasten (38) herausnehmbar ist und das Antriebselement nicht mit dem Sieb aus dem Siebkasten (38) herausnehmbar ist, **dadurch gekennzeichnet, dass** das Antriebselement eingerichtet ist, das Verstellelement (64) in zwei Richtungen zu bewegen, und dass die Antriebsverbindung zwischen dem Antriebselement und dem Verstellelement (64) durch Anheben des Rahmens (46) lösbar ist.

2. Reinigungseinrichtung (26) nach Anspruch 1, **dadurch gekennzeichnet, dass** das Antriebselement ein Zahnrad (68) oder ein Schneckenrad ist, das mit einer Zahnstange (66) des Verstellelements (64) zusammenwirkt.

3. Reinigungseinrichtung (26) nach Anspruch 1 oder 2, **dadurch gekennzeichnet, dass** die Lamellen (44) sich quer zur Fahrtrichtung des Mähdreschers (10) erstrecken und mit einer verstellbaren Verstellstange (54) verbunden sind, die sich in der Fahrtrichtung des Mähdreschers (10) erstreckt, wobei das Verstellelement (64) eingerichtet ist, die Verstellstange (54) zu verstellen, insbesondere zu verschieben.

4. Reinigungseinrichtung nach Anspruch 2 oder 3, **dadurch gekennzeichnet, dass** die Zahnstange (66) eine in die Verstellstange (54) eingebrachte Verzahnung ist.

5. Reinigungseinrichtung (26) nach einem der vorhergehenden Ansprüche, **dadurch gekennzeichnet, dass** das Antriebselement durch einen elektrischen oder hydraulischen Motor (78) antreibbar ist.

6. Reinigungseinrichtung (26) nach einem der Ansprüche 1 bis 5, **dadurch gekennzeichnet, dass** nur das Antriebselement und eine drehbare Welle (70), die das Antriebselement mit dem Motor (78) verbindet, innerhalb des Siebkastens (38) angeordnet sind, und dass der Motor (78) und gegebenenfalls weitere Elemente des Antriebsstrangs des Antriebselements außerhalb des Siebkastens (38) angeordnet sind.

7. Reinigungseinrichtung (26) nach einem der Ansprüche 1 bis 6, **dadurch gekennzeichnet, dass** ein entfernbares Halteelement (60) an einer Seite des Rahmens (46) angeordnet ist, und dass das Sieb bei entferntem Halteelement (60) aus dem Siebkasten (38) herauszieh- bzw. -schiebbar ist.

8. Reinigungseinrichtung (26) nach einem der Ansprüche 1 bis 7, **dadurch gekennzeichnet, dass** das Sieb durch das Antriebselement aus dem Siebkasten (38) herausschiebbar bzw. in den Siebkasten (38) einziehbar ist.

9. Reinigungseinrichtung (26) nach einem der Ansprüche 1 bis 8, **dadurch gekennzeichnet, dass** das Verstellelement (64) bei Offen- bzw. Schließstellung der Lamellen (44) mit einem Anschlag zusammenwirkt.

10. Mähdrescher (10) mit einer Reinigungseinrichtung (26) nach einem der Ansprüche 1 bis 9.

## Claims (Claims for the following Contracting State(s): BE, DK, FR, GB, IT)

1. A cleaning device (26) for an agricultural combine harvester (10), with a sieve box (38) and at least one sieve which can be removed from the sieve box (38) and comprises a frame (46), adjustable slats (44) arranged therein and an adjusting element (64) for adjusting the slats (44), which is in a positive drive connection with the slats (44) in both directions of adjustment, wherein a drive element for adjusting the adjusting element (64) is arranged on the sieve box (38) and the sieve can be removed from the sieve box (38) without undoing a connection between the drive element and the adjusting element (64) and the drive element remains on the sieve box (38) with the sieve removed, **characterized in that** the drive element is arranged to move the adjusting element (64) in two directions.

2. A cleaning device (26) according to claim 1, **characterized in that** the drive element is a gearwheel (68) or a worm wheel, which cooperates with a rack (66) of the adjusting element (64).

3. A cleaning device (26) according to claim 1 or 2, **characterized in that** the slats (44) extend transverse to the direction of travel of the combine harvester (10) and are connected to an adjustable adjusting rod (54) which extends in the direction of travel of the combine harvester (10), wherein the adjusting element (64) is arranged to adjust the adjusting rod (54), especially to shift it.

4. A cleaning device according to claim 2 or 3, **characterized in that** the rack (66) comprises teeth formed in the adjusting rod (54).

5. A cleaning device (26) according to any of the preceding claims, **characterized in that** the drive element can be driven by an electric or hydraulic motor (78).

6. A cleaning device (26) according to any of claims 1 to 5, **characterized in that** only the drive element and a rotatable shaft (70), which connects the drive element to the motor (78) are arranged inside the sieve box (38), and **in that** the motor (78) and optionally further elements of the drive train of the drive element are arranged outside the sieve box (38).

7. A cleaning device (26) according to any of claims 1 to 6, **characterized in that** a removable retaining element (60) is arranged on one side of the frame (46) and **in that** the sieve can be pulled or slid out of the sieve box (38) with the retaining element (60) removed.

8. A cleaning device (26) according to any of claims 1 to 7, **characterized in that** the sievec can be shifted out of and shifted into the sieve box (38) by the drive element.

9. A cleaning device (26) according to any of claims 1 to 8, **characterized in that** the adjusting element (64) cooperates with a stop during opening or closing of the slats (44).

10. A combine harvester (10) with a cleaning device (26) according to any of claims 1 to 9.

## Claims (Claims for the following Contracting State(s): DE)

1. A cleaning device (26) for an agricultural combine harvester (10), with a sieve box (38) and at least one sieve which can be removed from the sieve box (38) and comprises a frame (46), adjustable slats (44) arranged therein and an adjusting element (64) for adjusting the slats (44), which is in a positive drive connection with the slats (44) in both directions of adjustment, wherein a drive element for adjusting the adjusting element (64) is arranged on the sieve box (38) and the sieve can be removed from the sieve box (38) without undoing a connection between the drive element and the adjusting element (64) and the drive element cannot be removed with the sieve from the sieve box (38), **characterized in that** the drive element is arranged to move the adjusting element (64) in two directions and **in that** the drive connection between the drive element and the adjusting element (64) can be freed by raising the frame (46).

2. A cleaning device (26) according to claim 1, **characterized in that** the drive element is a gearwheel (68) or a worm wheel, which cooperates with a rack (66) of the adjusting element (64).

3. A cleaning device (26) according to claim 1 or 2, **characterized in that** the slats (44) extend transverse to the direction of travel of the combine harvester (10) and are connected to an adjustable adjusting rod (54) which extends in the direction of travel of the combine harvester (10), wherein the adjusting element (64) is arranged to adjust the adjusting rod (54), especially to shift it.

4. A cleaning device according to claim 2 or 3, **characterized in that** the rack (66) comprises teeth formed in the adjusting rod (54).

5. A cleaning device (26) according to any of the preceding claims, **characterized in that** the drive element can be driven by an electric or hydraulic motor (78).

6. A cleaning device (26) according to any of claims 1 to 5, **characterized in that** only the drive element and a rotatable shaft (70), which connects the drive element to the motor (78) are arranged inside the sieve box (38), and **in that** the motor (78) and optionally further elements of the drive train of the drive element are arranged outside the sieve box (38).

7. A cleaning device (26) according to any of claims 1 to 6, **characterized in that** a removable retaining element (60) is arranged on one side of the frame (46) and **in that** the sieve can be pulled or slid out of the sieve box (38) with the retaining element (60) removed.

8. A cleaning device (26) according to any of claims 1 to 7, **characterized in that** the sievec can be shifted out of and shifted into the sieve box (38) by the drive element.

9. A cleaning device (26) according to any of claims 1 to 8, **characterized in that** the adjusting element (64) cooperates with a stop during opening or closing of the slats (44).

10. A combine harvester (10) with a cleaning device (26) according to any of claims 1 to 9.

## Revendications (Revendications pour l'(les) Etat(s) contractant(s) suivant(s): BE, DK, FR, GB, IT)

1. Dispositif de nettoyage (26) pour une moissonneuse-batteuse (10) agricole, comportant un carter pour grilles (38) et au moins une grille, qui peut être retirée hors du carter pour grilles (38), qui comporte un cadre (46), des lamelles (44) réglables, agencées dans ce dernier, ainsi qu'un élément de réglage (64) pour le réglage des lamelles (44), qui, dans les deux directions de réglage, est par conjugaison de forme en liaison d'entraînement avec les lamelles (44), un élément d'entraînement destiné au réglage de l'élément de réglage (64) étant agencé contre le carter pour grilles (38), la grille pouvant être retirée hors du carter pour grilles (38) sans démonter une liaison entre l'élément d'entraînement et l'élément de réglage (64), l'élément d'entraînement restant au carter pour grilles (38) lorsque la grille est retirée, **caractérisé en ce que** l'élément d'entraînement est conçu pour déplacer l'élément de réglage (64) dans deux directions.

2. Dispositif de nettoyage (26) selon la revendication 1, **caractérisé en ce que** l'élément d'entraînement est une roue dentée (68) ou une roue hélicoïdale, qui coopère avec une crémaillère (66) de l'élément de réglage (64).

3. Dispositif de nettoyage (26) selon la revendication 1 ou 2, **caractérisé en ce que** les lamelles (44) sont orientées transversalement à la direction de déplacement de la moissonneuse-batteuse (10) et sont reliées à une tige de réglage (54) réglable, qui s'étend dans la direction de déplacement de la moissonneuse-batteuse (10), l'élément de réglage (64) étant conçu pour régler, plus particulièrement pour déplacer la tige de réglage (54).

4. Dispositif de nettoyage (26) selon la revendication 2 ou 3, **caractérisé en ce que** la crémaillère (66) est une denture insérée dans la tige de réglage (54).

5. Dispositif de nettoyage (26) selon l'une quelconque des revendications précédentes, **caractérisé en ce que** l'élément d'entraînement peut être actionné par un moteur (78) électrique ou hydraulique.

6. Dispositif de nettoyage (26) selon l'une quelconque des revendications 1 à 5, **caractérisé en ce que** uniquement l'élément d'entraînement et un arbre rotatif (70), qui relie l'élément d'entraînement avec le moteur (78), sont agencés à l'intérieur du carter pour grilles (38) et **en ce que** le moteur (78) et, le cas échéant, d'autres éléments de la ligne de transmission de l'élément d'entraînement sont agencés en dehors du carter pour grilles (38).

7. Dispositif de nettoyage (26) selon l'une quelconque des revendications 1 à 6, **caractérisé en ce qu'**un élément de retenue (60) démontable est agencé sur un côté du cadre (46) et **en ce que** la grille peut être tirée ou coulissée vers l'extérieur du carter pour grilles (38) lorsque l'élément de retenue (60) est démonté.

8. Dispositif de nettoyage (26) selon l'une quelconque des revendications 1 à 7, **caractérisé en ce que** la grille peut être retirée hors du carter pour grilles (38) ou être introduite dans le carter pour grilles (38) par l'intermédiaire de l'élément d'entraînement.

9. Dispositif de nettoyage (26) selon l'une quelconque des revendications 1 à 8, **caractérisé en ce que** l'élément de réglage (64) coopère avec une butée dans la position d'ouverture et la position de fermeture des lamelles (44).

10. Moissonneuse-batteuse (10) comportant un dispositif de nettoyage (26) selon l'une quelconque des revendications 1 à 9.

## Revendications (Revendications pour l'(les) Etat(s) contractant(s) suivant(s): DE)

1. Dispositif de nettoyage (26) pour une moissonneuse-batteuse (10) agricole, comportant un carter pour grilles (38) et au moins une grille, qui peut être retirée hors du carter pour grilles (38), qui comporte un cadre (46), des lamelles (44) réglables, agencées dans ce dernier, ainsi qu'un élément de réglage (64) pour le réglage des lamelles (44), qui, dans les deux directions de réglage, est par conjugaison de forme en liaison d'entraînement avec les lamelles (44), un élément d'entraînement destiné au réglage de l'élément de réglage (64) étant agencé contre le carter pour grilles (38), la grille pouvant être retirée hors du carter pour grilles (38) sans démonter une liaison entre l'élément d'entraînement et l'élément de réglage (64), l'élément d'entraînement ne pouvant pas être retiré avec la grille du carter pour grilles (38), **caractérisé en ce que** l'élément d'entraînement est conçu pour déplacer l'élément de réglage (64) dans deux directions, et **en ce que** la liaison d'entraînement entre l'élément d'entraînement et l'élément de réglage peut être rompue par un soulèvement du cadre (46).

2. Dispositif de nettoyage (26) selon la revendication 1, **caractérisé en ce que** l'élément d'entraînement est une roue dentée (68) ou une roue hélicoïdale, qui coopère avec une crémaillère (66) de l'élément de réglage (64).

3. Dispositif de nettoyage (26) selon la revendication 1 ou 2, **caractérisé en ce que** les lamelles (44) sont orientées transversalement à la direction de déplacement de la moissonneuse-batteuse (10) et sont reliées à une tige de réglage (54) réglable, qui s'étend dans la direction de déplacement de la moissonneuse-batteuse (10), l'élément de réglage (64) étant conçu pour régler, plus particulièrement pour déplacer la tige de réglage (54).

4. Dispositif de nettoyage (26) selon la revendication 2 ou 3, **caractérisé en ce que** la crémaillère (66) est une denture insérée dans la tige de réglage (54).

5. Dispositif de nettoyage (26) selon l'une quelconque des revendications précédentes, **caractérisé en ce que** l'élément d'entraînement peut être actionné par un moteur (78) électrique ou hydraulique.

6. Dispositif de nettoyage (26) selon l'une quelconque des revendications 1 à 5, **caractérisé en ce que** uniquement l'élément d'entraînement et un arbre rotatif (70), qui relie l'élément d'entraînement avec le moteur (78), sont agencés à l'intérieur du carter pour grilles (38) et **en ce que** le moteur (78) et, le cas échéant, d'autres éléments de la ligne de transmission de l'élément d'entraînement sont agencés en dehors du carter pour grilles (38).

7. Dispositif de nettoyage (26) selon l'une quelconque des revendications 1 à 6, **caractérisé en ce qu'**un élément de retenue (60) démontable est agencé sur un côté du cadre (46) et **en ce que** la grille peut être tirée ou coulissée vers l'extérieur du carter pour grilles (38) lorsque l'élément de retenue (60) est démonté.

8. Dispositif de nettoyage (26) selon l'une quelconque des revendications 1 à 7, **caractérisé en ce que** la grille peut être retirée hors du carter pour grilles (38) ou être introduite dans le carter pour grilles (38) par l'intermédiaire de l'élément d'entraînement.

9. Dispositif de nettoyage (26) selon l'une quelconque des revendications 1 à 8, **caractérisé en ce que** l'élément de réglage (64) coopère avec une butée dans la position d'ouverture et la position de fermeture des lamelles (44).

10. Moissonneuse-batteuse (10) comportant un dispositif de nettoyage (26) selon l'une quelconque des revendications 1 à 9.
